# EUROPEAN PATENT APPLICATION

(11) **EP 4 346 246 A1**
(43) Date of publication of application: **03.04.2024**
(21) Application number: 22942481.7
(22) Date of filing: 07.12.2022
(51) Int. Cl.: H04W 4/16, H04W 4/90, H04W 68/00, H04W 76/50, H04M 3/42

(54) **EMERGENCY CALL CALLBACK ESTABLISHMENT METHOD AND APPARATUS, AND DEVICE AND STORAGE MEDIUM**

(30) Priority: 16.05.2022 CN 202210529090
(71) Applicant: Rolling Wireless S.À R.L., 2540 Luxembourg (LU)
(72) Inventor: SUN, Zipeng, Shenzhen, Guangdong 518055 (CN)
(74) Representative: J A Kemp LLP
(86) International application number: PCT/CN2022/137145
(87) International publication number: WO 2023/221461

(57) **Abstract**

Disclosed are an emergency call callback establishment method and apparatus, a device and a storage medium. In some embodiments, the emergency call callback establishment method is applied to a vehicle terminal and includes: receiving a paging message sent by a rescue device; identifying whether an emergency call callback identifier exists in the paging message; and hanging up a connected call and establishing an emergency call callback connection between the vehicle terminal and the rescue device when the vehicle terminal is in a call connection state if the emergency call callback identifier exists in the paging message.

## Description

### CROSS REFERENCE TO RELATED APPLICATIONS

The present disclosure claims priority to Chinese patent application No. 202210529090.8, entitled "Emergency Call Callback Establishment Method and Apparatus, Device and Storage Medium", filed on 16 May 2022, which is submitted to China National Intellectual Property Administration and is incorporated by reference in its entirety.

### FIELD

The present disclosure generally relates to the technical field of communications, in particular to an emergency call callback establishment method and apparatus, a device and a storage medium.

### BACKGROUND

Emergency call (eCall) has become a necessary function of a vehicle terminal. An eCall callback refers that a rescue device is allowed to call a vehicle terminal of an In-Vehicle System (IVS) to reestablish a call after an eCall is hung up, the rescue device may be a public safety answering point (PSAP) or a rescue mobile terminal.

In order to allow the eCall callback, the protocol clearly defines a T9 timer, during which the vehicle terminal keeps a registration state on a service network and is capable of answering a phone from the rescue device after the rescue device eliminates the call.

Before timeout of the T9 timer, first paging received by the vehicle terminal will be taken by the vehicle terminal as the eCall callback, and a connection is established according to an eCall callback process. Second paging and later paging received by the vehicle terminal are taken by the vehicle terminal as a common voice call.

If the first paging received by the vehicle terminal is paging for the common voice call, the second paging is paging for the eCall callback, the second paging for the eCall callback will be taken as the common voice call and be processed, and the rescue device also cannot trigger the vehicle terminal to transfer a minimum set of data (MSD), resulting in delaying rescue. Contents contained in the MSD may be: position information of vehicles, time, the quantity of passengers, license plate numbers, and other information needed for emergency rescue.

### SUMMARY

In a first aspect, the present disclosure relates to an emergency call callback establishment method, applied to a vehicle terminal, and including:
receiving a paging message sent by a rescue device;
identifying whether an emergency call callback identifier exists in the paging message; and
hanging up a connected call and establishing an emergency call callback connection between the vehicle terminal and the rescue device when the vehicle terminal is in a call connection state if the emergency call callback identifier exists in the paging message.

In some embodiments, when the emergency call callback identifier exists in the paging message, and the vehicle terminal is in an idle state, the emergency call callback connection is directly established between the vehicle terminal and the rescue device.

In some embodiments, identifying whether the emergency call callback identifier exists in the paging message includes:
identifying whether a numerical value of an emergency call callback identifier field in the paging message is the same as the preset value; and
if yes, the emergency call callback identifier exists in the paging message.

In some embodiments, within a preset time period after sending the emergency call to the rescue device, the paging message sent by the rescue device is received, and whether the emergency call callback identifier exists in the paging message is identified.

In some embodiments, after hanging up the connected call, the method further includes:
indicating, to a connected connection terminal which is on the call, that the vehicle terminal is receiving an emergency call callback.

In a second aspect, the present disclosure relates to an emergency call callback establishment method, applied to rescue device, and including:
sending a paging message to a vehicle terminal;
receiving an emergency call callback connection establishment request sent by the vehicle terminal, wherein the emergency call callback connection establishment request is sent after the vehicle terminal identifies that an emergency call callback identifier exists in the paging message; and
establishing an emergency call callback connection between the vehicle terminal and the rescue device corresponding to the emergency call callback connection establishment request.

In some embodiments, before sending the paging message to the vehicle terminal, the method further includes:
receiving an emergency call sent by the vehicle terminal.

In a third aspect, the present disclosure relates to an emergency call callback establishment apparatus, configured in a vehicle terminal, and including:
a receiving module, configured to receive a paging message sent by a rescue device;
an identifying module, configured to identify whether an emergency call callback identifier exists in the paging message; and
a processing module, configured to hang up a connected call and establish an emergency call callback connection between the vehicle terminal and the rescue device when the vehicle terminal is in a call connection state if the emergency call callback identifier exists in the paging message.

In a fourth aspect, the present disclosure relates to an electronic device, including: a processor, a memory and a communication bus, wherein the processor and the memory communicate with each other through the communication bus;
the memory is configured to store computer programs; and
the processor is configured to execute the programs stored in the memory to implement the emergency call callback establishment method of the first aspect, or implement the emergency call callback establishment method of the second aspect.

In a fifth aspect, the present disclosure relates to a computer readable storage medium, storing computer programs, wherein the computer programs, when executed by a processor, implement the emergency call callback establishment method of the present disclosure.

In some embodiments, the vehicle terminal receives the paging message sent by the rescue device, and identifies whether the emergency call callback identifier exists in the paging message, if the emergency call callback identifier exists in the paging message, the connected call is hung up and the emergency call callback connection is established between the vehicle terminal and the rescue device when the vehicle terminal is in the call connection state. The present disclosure determines that the paging message is used for the emergency call callback when the vehicle terminal identifies that the emergency call callback identifier exists in the paging message, when the vehicle terminal is in the call connection state, the priority of the emergency call callback is set as the highest, the connected call is hung up, the emergency call callback connection is established between the vehicle terminal and the rescue device, avoiding delay of rescue, and avoiding the situation that since the paging message for the emergency call callback is not the first paging message received by the vehicle terminal, the common voice call connection is established by mistake, then the minimum set of data for the emergency call cannot be transmitted. The problem that the emergency call callback is taken as the common voice call for being processed by mistake is solved, a success rate of the emergency call callback is improved, and smooth communication between a vehicle terminal of vehicles in accident and the rescue device is maintained, avoiding affecting rescue of the vehicles in accident.

### BRIEF DESCRIPTION OF THE DRAWINGS

Accompanying drawings herein are incorporated into and constitute a part of the specification, show embodiments that comply with the present disclosure, and are used together with the specification to explain principles of the present disclosure.

In order to illustrate the technical solutions in the embodiments of the present disclosure more clearly, a simple introduction on the accompanying drawings which are needed in the description of the embodiments is given below. Apparently, other accompanying drawings may further be obtained by those of ordinary skill in the art without any creative effort.
Fig. 1 is a schematic flow diagram of an emergency call callback establishment method applied to a vehicle terminal in an embodiment of the present disclosure;
Fig. 2 is a schematic flow diagram of an emergency call callback establishment method applied to a rescue device in an embodiment of the present disclosure;
Fig. 3 is a schematic flow diagram of an emergency call callback establishment method in an embodiment of the present disclosure;
Fig. 4 is a schematic diagram of a framework of an emergency call callback establishment system in an embodiment of the present disclosure;
Fig. 5 is a schematic structural diagram of an emergency call callback establishment apparatus configured in a vehicle terminal in an embodiment of the present disclosure;
Fig. 6 is a schematic structural diagram of an emergency call callback establishment apparatus configured in a rescue device in an embodiment of the present disclosure; and
Fig. 7 is a schematic structural diagram of an electronic device of an embodiment of the present disclosure.

### DETAILED DESCRIPTION

To make objectives, technical solutions and advantages of embodiments of the present disclosure clearer, the technical solutions in the present disclosure will be described clearly and completely below in conjunction with accompanying drawings in the embodiments of the present disclosure. Apparently, the embodiments described below are a part, but not all of the embodiments of the present disclosure. All of the other embodiments, obtained by those of ordinary skill in the art based on the embodiments of the present disclosure without any inventive efforts, fall into the protection scope of the present disclosure.

An embodiment of the present disclosure provides an emergency call callback establishment method, and emergency call callback establishment is implemented through the cooperation of a vehicle terminal and a rescue device.

In some embodiments, the vehicle terminal is a module capable of implementing a communication function, the module may be a wireless communication module, for example, may be any one of a 2G communication module, a 3G communication module, a 4G communication module, a 5G communication module and an NB-IOT communication module.

The rescue device may be a public safety answering point (PSAP), and may also be a rescue mobile terminal. The rescue device includes a module capable of implementing a communication function, the module may be a wireless communication module, for example, may be any one of a 2G communication module, a 3G communication module, a 4G communication module, a 5G communication module and an NB-IOT communication module.

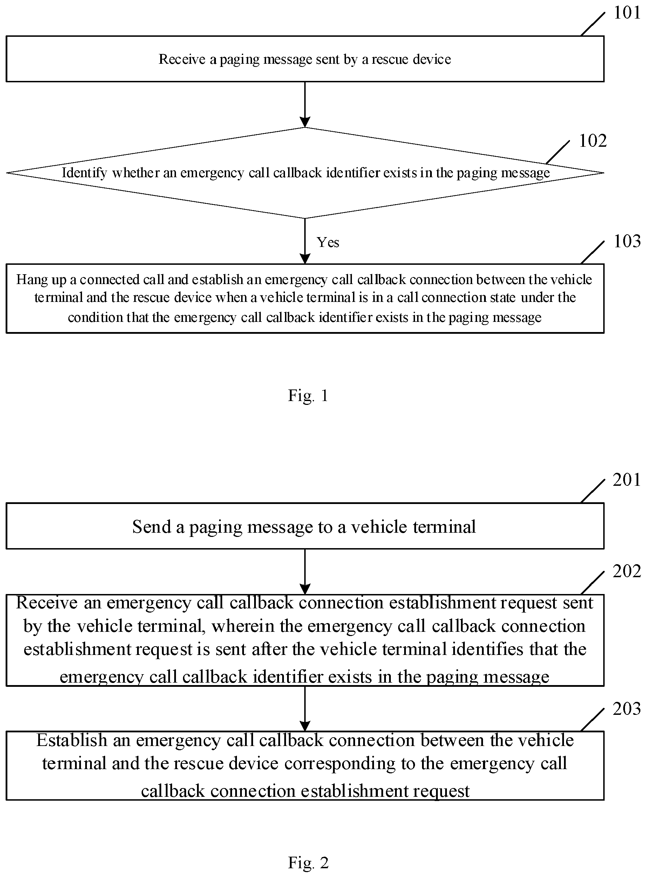

In an embodiment of the present disclosure, as shown in Fig. 1, the emergency call callback establishment method applied to the vehicle terminal includes:
step 101, a paging message sent by a rescue device is received;
step 102, whether an emergency call callback identifier exists in the paging message is identified, and if yes, step 103 is executed; and
step 103, when the vehicle terminal is in a call connection state, a connected call is hung up, and an emergency call callback connection is established between the vehicle terminal and the rescue device.

In some embodiments, the rescue device may be a PSAP, and may also be a rescue mobile terminal. An identifier of the rescue device may be extracted from the paging message.

The emergency call callback identifier is used to indicate that the paging message is used for the emergency call callback.

In some embodiments, identifying whether the emergency call callback identifier exists in the paging message includes: whether a numerical value of an emergency call callback identifier field in the paging message is the same as the preset value is identified; and if yes, the emergency call callback identifier exists in the paging message.

In some embodiments, the preset value may be a set value, for example, the preset value is 1, the numerical value corresponding to an emergency call callback identifier field eCall flag in the paging message is 1, which indicates that the emergency call callback identifier exists in the paging message, and the numerical value corresponding to the emergency call callback identifier field eCall flag in the paging message is 0, which indicates that the emergency call callback identifier does not exist in the paging message.

In some embodiments, within a preset time period after sending the emergency call to the rescue device, the paging message sent by the rescue device is received, and whether the emergency call callback identifier exists in the paging message is identified.

In some embodiments, the preset time period after sending the emergency call to the rescue device refers to a time period of a timing duration between starting the T9 timer on the vehicle terminal and the T9 timer. Within the preset time period after sending the emergency call to the rescue device, the vehicle terminal is in an emergency call callback state, the vehicle terminal can receive the paging message sent by the rescue device, and whether the emergency call callback identifier exists in the paging message is identified. Not within the preset time period, the vehicle terminal will not receive the paging message sent by the rescue device, and will further not identify whether the emergency call callback identifier exists in the paging message.

When the vehicle terminal is in the call connection state, a priority of the emergency call callback is set as the highest, the connected call is hung up, the emergency call callback connection is established between the vehicle terminal and the rescue device, which avoids that the connected call hinders the emergency call callback connection, and smooth communication between a vehicle terminal of vehicles in accident and the rescue device is maintained, avoiding affecting rescue of the vehicles in accident.

The emergency call callback connection is established between the vehicle terminal and the rescue device, it may be that the vehicle terminal sends an emergency call callback connection establishment request to the rescue device, and then the emergency call callback connection is established between the vehicle terminal and the rescue device.

After establishing the emergency call callback connection between the vehicle terminal and the rescue device, the vehicle terminal can send a minimum set of data (MSD) to the rescue device through the emergency call callback connection. Contents contained in the MSD may be: position information of vehicles, time, the quantity of passengers, license plate numbers, and other information needed for emergency rescue.

In some embodiments, after hanging up the connected call, the emergency call callback establishment method applied to the vehicle terminal further includes: indicating, to a connected connection terminal which is on the call, that the vehicle terminal is receiving an emergency call callback.

Indicating, to the connected connection terminal which is on the call, that the vehicle terminal is receiving the emergency call callback can avoid that after the connected call is hung up, since the connected connection terminal which is on the call does not know that the vehicle terminal is receiving the emergency call callback, continues to send a paging message to the vehicle terminal, interfering communication between the vehicle terminal and the rescue device, and then affecting rescue of vehicles in accident.

In some embodiments, if an emergency call callback identifier exists in the paging message, and when the vehicle terminal is in an idle state, the emergency call callback connection is directly established between the vehicle terminal and the rescue device.

When the emergency call callback identifier exists in the paging message, and the vehicle terminal is in the idle state, the emergency call callback connection is directly established between the vehicle terminal and the rescue device, smooth communication between a vehicle terminal of a vehicle in accident and the rescue device is ensured, avoiding affecting rescue of the vehicle in accident.

In some embodiments, after step 102, if the emergency call callback identifier does not exist in the paging message, the paging message is directly taken as a common voice call for being processed.

In an embodiment of the present disclosure, as shown in Fig. 2, the emergency call callback establishment method applied to the rescue device includes:
step 201, a paging message is sent to a vehicle terminal;
step 202, an emergency call callback connection establishment request sent by the vehicle terminal is received, wherein the emergency call callback connection establishment request is sent after the vehicle terminal identifies that an emergency call callback identifier exists in the paging message; and
step 203, an emergency call callback connection is established between the vehicle terminal and the rescue device corresponding to the emergency call callback connection establishment request.

In some embodiments, the rescue device may be a PSAP, and may also be a rescue mobile terminal.

In some embodiments, the rescue device sends the paging message to the vehicle terminal, and the rescue device may send the paging message to an access network to trigger the access network to add the emergency call callback identifier into the paging message.

The rescue device may have a specific number, for example, an emergency rescue number is 112. When the access network receives the paging message sent by the specific number, the emergency call callback identifier is added into the paging message.

In some embodiments, adding the emergency call callback identifier into the paging message may be setting a numerical value corresponding to an emergency call callback identifier field in the paging message, for example, the numerical value corresponding to an emergency call callback identifier field eCall flag in the paging message is 1, which indicates that the emergency call callback identifier exists in the paging message, and the numerical value corresponding to the emergency call callback identifier field eCall flag in the paging message is 0, which indicates that the emergency call callback identifier does not exist in the paging message.

In some embodiments, before sending the paging message to the vehicle terminal, the emergency call callback establishment method applied to the rescue device further includes: receiving an emergency call sent by the vehicle terminal.

The rescue device will send the paging message for the emergency call callback to the vehicle terminal only after receiving the emergency call sent by the vehicle terminal.

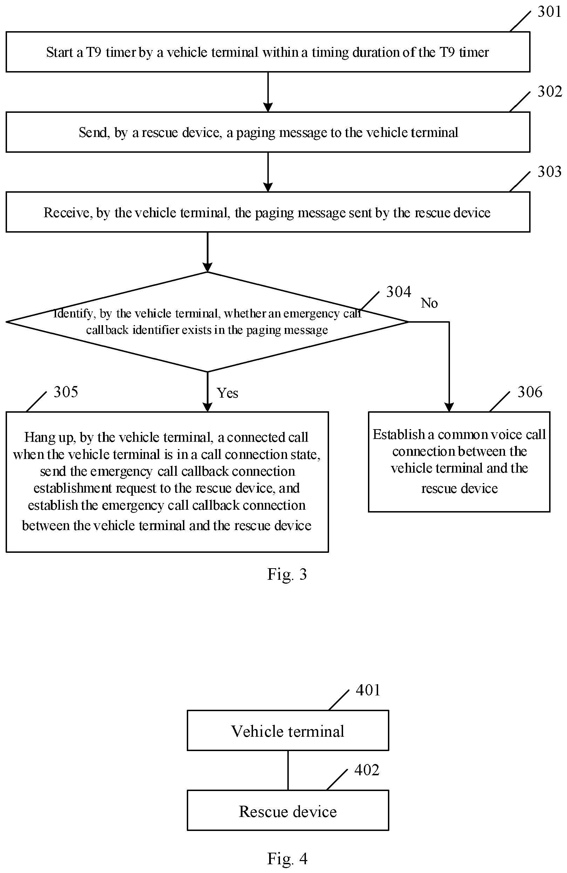

In an embodiment, as shown in Fig. 3, the emergency call callback establishment method includes:
step 301, the vehicle terminal starts a T9 timer within a timing duration of the T9 timer;
step 302, the rescue device sends the paging message to the vehicle terminal;
step 303, the vehicle terminal receives the paging message sent by the rescue device;
step 304, the vehicle terminal identifies whether the emergency call callback identifier exists in the paging message, if yes, step 305 is executed, and otherwise, step 306 is executed;
step 305, when the vehicle terminal is in the call connection state, the vehicle terminal hangs up the connected call, sends the emergency call callback connection establishment request to the rescue device, and establishes the emergency call callback connection between the vehicle terminal and the rescue device; and
step 306, a common voice call connection is established between the vehicle terminal and the rescue device.

In an embodiment of the present disclosure, the vehicle terminal receives the paging message sent by the rescue device, identifies whether the emergency call callback identifier exists in the paging message, if the emergency call callback identifier exists in the paging message, the connected call is hung up when the vehicle terminal is in the call connection state, and the emergency call callback connection is established between the vehicle terminal and the rescue device. The present disclosure determines that the paging message is used for the emergency call callback when the vehicle terminal identifies that the emergency call callback identifier exists in the paging message, when the vehicle terminal is in the call connection state, the priority of the emergency call callback is set as the highest, the connected call is hung up, the emergency call callback connection is established between the vehicle terminal and the rescue device, avoiding delay of rescue, and avoiding the situation that since the paging message for the emergency call callback is not the first paging message received by the vehicle terminal, the common voice call connection is established by mistake, then the minimum set of data for the emergency call cannot be transmitted. The problem that the emergency call callback is taken as the common voice call for being processed by mistake is solved, a success rate of the emergency call callback is improved, and smooth communication between a vehicle terminal of vehicles in accident and the rescue device is maintained, avoiding affecting rescue of the vehicles in accident.

An embodiment of the present disclosure provides an emergency call callback establishment system, the implementation of the system may refer to the description of the method embodiment part of the present disclosure, repetitions are omitted, and as shown in Fig. 4, the emergency call callback establishment system includes a vehicle terminal 401 and a rescue device 402.

The vehicle terminal 401 is configured to receive a paging message sent by the rescue device 402; identify whether an emergency call callback identifier exists in the paging message; and hang up a connected call when the vehicle terminal is in a call connection state if the emergency call callback identifier exists in the paging message, and establish an emergency call callback connection between the vehicle terminal 401 and the rescue device 402; and
the rescue device 402 is configured to send the paging message to the vehicle terminal 401; receive an emergency call callback connection establishment request sent by the vehicle terminal 401, wherein the emergency call callback connection establishment request is sent after the vehicle terminal identifies that the emergency call callback identifier exists in the paging message; and establish the emergency call callback connection between the vehicle terminal 401 and the rescue device 402 aiming at the emergency call callback connection establishment request.

In some embodiments, the rescue device 402 may be a PSAP, and may also be a rescue mobile terminal.

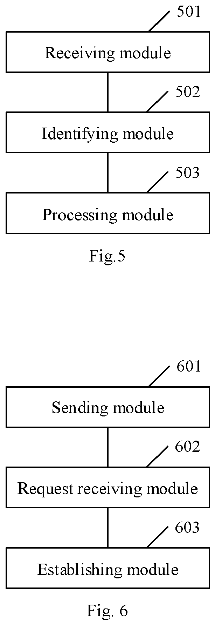

An embodiment of the present disclosure provides an emergency call callback establishment apparatus, configured in a vehicle terminal, the implementation of the apparatus may refer to the description of the method embodiment part of the present disclosure, repetitions are omitted, and as shown in Fig. 5, the apparatus includes:
a receiving module 501, configured to receive a paging message sent by a rescue device;
an identifying module 502, configured to identify whether an emergency call callback identifier exists in the paging message; and
a processing module 503, configured to hang up a connected call when the vehicle terminal is in a call connection state if the emergency call callback identifier exists in the paging message, and establish an emergency call callback connection between the vehicle terminal and the rescue device.

An embodiment of the present disclosure provides an emergency call callback establishment apparatus, configured in a rescue device, the implementation of the apparatus may refer to the description of the method embodiment part of the present disclosure, repetitions are omitted, and as shown in Fig. 6, the apparatus includes:
a sending module 601, configured to send a paging message to a vehicle terminal;
a request receiving module 602, configured to receive an emergency call callback connection establishment request sent by the vehicle terminal, wherein the emergency call callback connection establishment request is sent after the vehicle terminal identifies that the emergency call callback identifier exists in the paging message; and
an establishing module 603, configured to establish an emergency call callback connection between the vehicle terminal and the rescue device aiming at the emergency call callback connection establishment request.

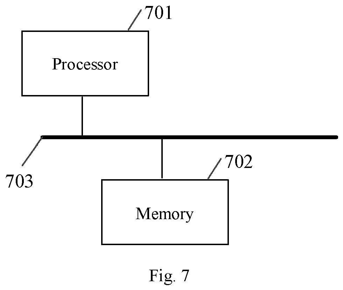

An embodiment of the present disclosure further provides an electronic device, as shown in Fig. 7, the electronic device mainly includes: a processor 701, a memory 702 and a communication bus 703, the processor 701 and the memory 702 communicate with each other through the communication bus 703, the memory 702 stores programs executed by the processor 701, and the processor 701 executes the programs stored in the memory 702 to implement the following steps:
receiving a paging message sent by rescue device; identifying whether an emergency call callback identifier exists in the paging message; and hanging up a connected call when a vehicle terminal is in a call connection state if the emergency call callback identifier exists in the paging message, and establishing an emergency call callback connection between the vehicle terminal and the rescue device;
   or,
sending the paging message to the vehicle terminal; receiving an emergency call callback connection establishment request sent by the vehicle terminal, wherein the emergency call callback connection establishment request is sent after the vehicle terminal identifies that the emergency call callback identifier exists in the paging message; and establishing the emergency call callback connection between the vehicle terminal and the rescue device aiming at the emergency call callback connection establishment request.

The communication bus 703 mentioned in the above electronic device may be a peripheral component interconnect (PCI) standard bus or an extended industry standard architecture (EISA) bus, etc. The communication bus 703 may be an address bus, a data bus, a control bus, etc. For convenience of representation, Fig. 7 takes only one bold line for representation, but it does not represent that there is only one bus or one type of bus.

The memory 702 may include a random access memory (RAM), and may also include a non-volatile memory, such as at least one disk memory. In some embodiments, the memory may further be at least one storing apparatus located away from the above-mentioned processor 701.

The above processor 701 may be a general-purpose processor, including a central processing unit (CPU), a network processor (NP), etc., may further be a digital signal processor (DSP), an application specific integrated circuit (ASIC), a field-programmable gate array (FPGA) or other programmable logic devices, discrete gate or transistor logic devices, and discrete hardware components.

In an embodiment of the present disclosure, a computer readable storage medium is further provided. The computer readable storage medium stores computer programs, and the computer programs, when running on a computer, enable the computer to execute the emergency call callback establishment method of the present disclosure.

In the above embodiment, it may be implemented all or partly through software, hardware, firmware or any combination thereof. When the software is used for implementation, it may be implemented all or partly in a form of a computer program product. The computer program product includes one or more computer instructions. When the computer instructions are loaded or executed on the computer, flows or functions according to the embodiments of the present disclosure are all or partly generated. The computer may be a general-purpose computer, a dedicated computer, a computer network or other programmable apparatuses. The computer instructions may be stored in a computer readable storage medium, or be transmitted from one computer readable storage medium to another computer readable storage medium, for example, the computer instructions are transmitted from one website, computer, server or data center to another website, computer, server or data center through a wired (such as a coaxial-cable, an optical fiber, a digital subscriber line (DSL)) or a wireless (such as infrared, microwave, etc.) mode. The computer readable storage medium may be any available medium capable of being accessed by a computer or a server, a data center and other data storage devices containing one or more available medium integrations. The available medium may be a magnetic medium (such as a floppy disk, a hard disk, a magnetic tape, etc.), an optical medium (such as a DVD) or a semiconductor medium (such as a solid state disk), etc.

It needs to be noted that in the text, relationship terms such as "first" and "second" are only used to distinguish one entity or operation from another entity or operation, and do not necessarily require or imply any such actual relationship or order between these entities or operations. Moreover, terms "include", "contain" or any other varieties are intended to cover non-exclusive inclusion, so that processes, methods, goods or devices including of a series of elements not only include those elements, but also include other elements which are not clearly listed, or further include elements intrinsic for the processes, methods, goods or devices. In the absence of more restrictions, an element limited by a statement "including one..." does not excluded that there are other identical elements in the processes, methods, goods or devices including the element.

The above mentioned is only the specific implementation of the present disclosure, so that those skilled in the art can understand or implement the present disclosure. Various modifications on these embodiments are apparent for those skilled in the art, and general principles defined in the text may be implemented in other embodiments without departing from the spirit or scope of the present disclosure. Therefore, the present disclosure will not be limited to these embodiments shown in the text, but will conform to the broadest scope consistent with the principles and novel features disclosed in the text.

## Claims

1. An emergency call callback establishment method, applied to a vehicle terminal, and comprising:
receiving a paging message sent by a rescue device;
identifying whether an emergency call callback identifier exists in the paging message; and
hanging up a connected call and establishing an emergency call callback connection between the vehicle terminal and the rescue device when the vehicle terminal is in a call connection state, under the condition that the emergency call callback identifier exists in the paging message.

2. The emergency call callback establishment method of claim 1, when the emergency call callback identifier exists in the paging message, and the vehicle terminal is in an idle state, the emergency call callback connection is directly established between the vehicle terminal and the rescue device.

3. The emergency call callback establishment method of claim 1 or 2, wherein identifying whether the emergency call callback identifier exists in the paging message comprises:
identifying whether a numerical value of an emergency call callback identifier field in the paging message is the same as the preset value; and
if yes, the emergency call callback identifier exists in the paging message.

4. The emergency call callback establishment method of any of claims 1 to 3, within a preset time period after sending the emergency call to the rescue device, the paging message sent by the rescue device is received, and whether the emergency call callback identifier exists in the paging message is identified.

5. The emergency call callback establishment method of any of claims 1 to 3, after hanging up the connected call, the method further comprises:
indicating, to a connected connection terminal which is on the call, that the vehicle terminal is receiving an emergency call callback.

6. An emergency call callback establishment method, applied to a rescue device, and comprising:
sending a paging message to a vehicle terminal;
receiving an emergency call callback connection establishment request sent by the vehicle terminal, wherein the emergency call callback connection establishment request is sent after the vehicle terminal identifies that an emergency call callback identifier exists in the paging message; and
establishing an emergency call callback connection between the vehicle terminal and the rescue device responding to the emergency call callback connection establishment request.

7. The emergency call callback establishment method of claim 6, before sending the paging message to the vehicle terminal, the method further comprises:
receiving an emergency call sent by the vehicle terminal.

8. An emergency call callback establishment apparatus, configured in a vehicle terminal, and comprising:
a receiving module, configured to receive a paging message sent by a rescue device;
an identifying module, configured to identify whether an emergency call callback identifier exists in the paging message; and
a processing module, configured to hang up a connected call and establish an emergency call callback connection between the vehicle terminal and the rescue device when the vehicle terminal is in a call connection state under the condition that the emergency call callback identifier exists in the paging message.

9. An electronic device, comprising: a processor, a memory and a communication bus, wherein the processor and the memory communicate with each other through the communication bus;
the memory is configured to store computer programs; and
the processor is configured to execute the programs stored in the memory to implement the emergency call callback establishment method of any one of claims 1 to 5, or implement the emergency call callback establishment method of claim 6 or 7.

10. A computer readable storage medium, storing computer programs, wherein the computer programs, when executed by a processor, implement the emergency call callback establishment method of any one of claims 1 to 5, or implement the emergency call callback establishment method of claim 6 or 7.
